Europäisches Patentamt

(19) European Patent Office

Office européen des brevets

(11) Veröffentlichungsnummer: **0 154 027**
**B1**

(12) # EUROPÄISCHE PATENTSCHRIFT

(45) Veröffentlichungstag der Patentschrifft:
28.02.90

(51) Int. Cl. 5: **H 02 G   3/22**

(21) Anmeldenummer: 84116015.3

(22) Anmeldetag: 20.12.84

(54) Durchführung für mindestens ein elektrisches Kabel durch eine Wandöffnung.

(30) Priorität: 28.02.84 DE 3407187

(43) Veröffentlichungstag der Anmeldung:
11.09.85 Patentblatt 85/37

(45) Bekanntmachung des Hinweises auf die Patenterteilung:
28.02.90 Patentblatt 90/09

(84) Bennante Vertragsstaaten:
AT BE CH DE FR GB IT LI NL SE

(56) Entgegenhaltungen:
DE-A-2 411 613
DE-C-958 671
GB-A-2 140 114
US-A-4 061 344

(73) Patentinhaber: Hauff, Werner
Herlsbühlstrasse 19
D-7925 Dischingen-Ballmertshofen (DE)

(72) Erfinder: Hauff, Werner
Herlsbühlstrasse 19
D-7925 Dischingen-Ballmertshofen (DE)

(74) Vertreter: Fay, Hermann, Dipl.-Phys. Dr.
Ensingerstrasse 21 Postfach 1767
D-7900 Ulm (Donau) (DE)

LIBERGRAF, STOCKHOLM 1990

2

**Beschreibung**

Die Erfindung betrifft eine Durchführung für mindestens ein elektrisches Kabel durch eine Wandöffnung, bestehend aus einem den Leerraum zwischen dem Kabel und der Laibung der Wandöffnung ausfüllenden, zumindest teilweise elastischen Dichtkörper, der eine dem Kabelquerschnitt entsprechende Kabelaufnahme bildet und einerseits gegen das Kabel, andererseits gegen die Laibung der Wandöffnung abdichtet, und aus einem Futterrahmen, der eine Druckvorrichtung zum elastischen Verpressen des Dichtkörpers in der Wandöffnung bildet.

Durchführungen dieser Art sind beispielsweise aus der DE-PS - 958 671 bekannt und dienen dazu, einen Feuerschutzabschluß zu bilden, durch den Kabeltrassen zwischen verschiedenen, durch die Wand voneinander getrennten Brandabschnittzonen feuerbeständig abgeschottet werden. Außer einer möglichst langen Feuerwiderstandsdauer soll die Durchführung außerdem die Eigenschaft einer möglichst guten Abdichtung gegen Wasser, Gas und Rauch besitzen. Bei den bekannten Durchführungen besteht der Dichtkörper aus einem Kunstkautschuk wie Neopren oder Chloropren, dem zur Erhöhung der Feuerwiderstandsdauer Flammschutzmittel beigefügt sind. Hierfür ist insbes. Aluminiumhydroxid Al(OH)$_3$ bekannt, das sich unter der Erwärmung im Brandfall unter erheblicher Wärmeaufnahme zersetzt und Wasser abspaltet, das dampfförmig freigesetzt wird. Die Wärmeaufnahme wirkt dabei im Sinne einer Kühlung des Kabels und der Durchführungsteile in der Brandzone und das entstehende Wasser, da es an der Brandstelle Sauerstoff verdrängt, im Sinne eines flammhemmenden Schutzgases. Jedoch ist die Beimischung eines solchen Flammschutzmittels zu Kautschuk auf vergleichsweise geringe Mengen begrenzt, weil die Beimischung die technischen Werte der Kautschukmischung sehr stark beeinträchtigt und schon durch die unvermeidbare Vulkanisation der Kautschukmischung ein starker thermischer Abbau des beigegebenen Flammschutzmittels stattfindet, was ebenfalls hohe Flammschutzmittelgehalte in der Kautschukmischung ausschließt. Im übrigen erfordert die Einarbeitung des Flammschutzmittels in die Kautschukmischung erheblichen Aufwand durch Mischer, Kneter und dergl., was alles zu einem erheblichen Preis für derartige Kautschuk-Spezialmischungen führt. Neben Aluminiumhydroxid können derartige Spezialmischungen auch Blähmittel enthalten, die in der Hitze des Brandfalles aufgehen, um einen Abbrand des Kabelmantels und des Dichtkörperwerkstoffes mehr oder weniger zu kompensieren und dadurch ein zu schnelles Fortschreiten der Brandzone zu verhindern. Da die Vulkanisationstemperatur im Hinblick auf das Flammschutzmittel möglichst niedrig sein muß, ist die Vulkanisationszeit für den Dichtkörper entsprechend groß, wobei sich die Vulkanisationszeit noch außerdem dadurch verlängert, daß die zwischen den Kabelaufnahmen im Dichtkörper vorhandenen Wanddicken zumindest bereichsweise verhältnismäßig groß sind. Die Formen, in welchen die Dichtkörper vulkanisiert werden, sind daher jeweils nachteilig lange belegt.

Der Erfindung liegt die Aufgabe zugrunde, eine Durchführung der eingangs genannten Art so auszubilden, daß die Menge des zum Einsatz kommenden Feuerschutzmittels wesentlich erhöht und dadurch die Feuerwiderstandsdauer der Durchführung entsprechend verlängert werden kann.

Diese Aufgabe wird nach der Erfindung dadurch gelöst, daß im Dichtkörper sich zur Kabelaufnahme hin und/oder im Futterrahmen bzw. in seinen die Druckvorrichtung bildenden Teilen sich zum Dichtkörper hin öffnende Hohlräume vorgesehen sind, die mit einem Flammschutzmittel gefüllt sind, das sich bei Erwärmung im Brandfall unter Wärmeaufnahme (endogen) zersetzt und ein flammhemmendes Schutzgas abspaltet. Vorzugsweise enthält das Flammschutzmittel überwiegend Aluminiumhydroxid Al(OH)$_3$.

Der durch die Erfindung erreichte Vorteil besteht zunächst darin, daß auf eine Beimischung des Flammschutzmittels zu anderen Werkstoffen, wie jenen des Dichtkörpers oder des Futterrahmens bzw. seiner die Druckvorrichtung bildenden Teile, verzichtet wird. Deren Werkstoffeigenschaften werden daher nicht durch Beimischung des Flammschutzmittels beeinträchtigt. Das bedeutet bezüglich des Dichtkörpers auch, daß für ihn auf teure Spezialmischungen verzichtet und er unter hohen Temperaturen während entsprechend kürzeren Zeiten vulkanisiert werden kann, wobei sich diese Zeiten noch dadurch verkürzen, daß die für die Aufnahme des Flammschutzmittels vorgesehenen Hohlräume die maximalen Wandstärken des Dichtkörpers erheblich verringern und der Dichtkörper mit seinen Hohlräumen schon deswegen schneller ausvulkanisierbar ist. Das Flammschutzmittel wird erst nach vollständiger Fertigstellung des Dichtkörpers, des Futterrahmens bzw. seiner die Druckvorrichtung bildenden Teile in dessen bzw. deren Hohlräume eingefüllt und kann daher durch die für deren Herstellung erforderlichen Fertigungs- und Wärmebehandlungsprozesse nicht beeinträchtigt werden. Ein vorzeitiger thermischer Abbau des Flammschutzmittels ist also ausgeschlossen. Vor allem aber ist die Menge des Flammschutzmittels nicht durch die Möglichkeiten seiner Beimischung zu anderen Werkstoffen, sondern nur durch die Größe der zu seiner Aufnahme zur Verfügung stehenden Hohlräume begrenzt, was den Einsatz erheblich größerer Mengen an Flammschutzmittel als bisher im Fall nur einer Beimischung zu anderen Werkstoffen ermöglicht. Darüber hinaus besteht durch die Art der Anordnung und Ausbildung dieser Hohlräume die Möglichkeit, das Flammschutzmittel über die gesamte Länge der Durchführung zu verteilen, so daß mit fortschreitendem Abbrand stets neues Flammschutzmittel erschlossen wird und zur Verfügung steht, aber auch das Flammschutzmittel gezielt und bereichsweise sehr konzentriert an im Brandfall besonders kritischen Stellen der Durchführung zur Wirkung kommen zu lassen. Da sich die Hohlräume im Dichtkörper zu den Kabelaufnahmen hin öffnen, gelangt das im Brandfall aus dem Flammschutzmittel freiwerdende Schutzgas, im Fall von Al(OH)₃ also Wasserdampf, unmittelbar in die Kabelaufnahmen, soweit sie durch Abbrand des Kabelmantels überhaupt freiwerden. Dieser Wasserdampf übt im Bereich der Kabelaufnehmen durch Verdrängen des Sauerstoffs eine stark flammhemmende und kühlende Wirkung sowohl gegenüber dem Kabelmantel auch auch gegenüber dem Dichtkörper selbst aus, und kühlt insbesondere auch die durch den Abbrand des Kabelmantels freigewordene metallische Kabelseele, deren Wärmeleitung aus der Brandzone in die vom Brand noch unberührten Kabel- und Durchführungsbereiche hinein somit erheblich verringert wird, was ebenfalls den Abbrand im Sinne längerer Feuerwiderstandsdauer reduziert. Das Fortschreiten der Brandzone in der Kabelaufnahme wird weiter noch dadurch verringert, daß bei der Zersetzung des Flammschutzmittels, vor allem im Falle von Al(OH)₃, sich an der Oberfläche des Kunststoff- bzw. Kautschukwerkstoffs von Kabelmantel bzw. Dichtkörper aus den Verkohlungsprodukten und Al₂O₃ Schutzschichten bilden, die das Fortschreiten der Verbrennungsfront sehr stark behindern. Auch der Abbrand des Dichtkörpers selbst außerhalb des Bereichs seiner Kabelaufnahmen wird vermindert, nämlich durch das Flammschutzmittel in den Hohlräumen des Futterrahmens bzw. seiner die Druckvorrichtung bildenden Teile. Hierdurch wird die Temperatur des Dichtkörpers in den mit dem Futterrahmen bzw. den die Druckvorrichtung bildenden Teilen in Berührung stehenden Bereichen begrenzt und ein schneller Abbrand des Dichtkörpers von dort aus verhindert, zumal hier das aus den Hohlräumen freiwerdende Schutzgas größere Oberflächenbereiche des Dichtkörpers bestreichen kann und in diesen Bereichen somit wiederum stark flammhemmend wirkt. Im Ergebnis wird durch die Erfindung sowohl der Abbrand der Kabelmäntel, wie auch der des Dichtkörpers insgesamt sehr wirksam behindert, so daß die Feuerwiderstandsdauer selbst im Vergleich zu einem Dichtkörper aus bisher üblicher teurer Spezialkautschukmischung sehr wesentlich verlängert ist, ohne daß es weitergehender Maßnahmen an der Durchführung, insbes. auch keiner flammhemmender Zusatzarbeiten an den Kabeln selbst vor und/oder hinter der Durchführung bedarf. Von Vorteil ist schließlich auch, das die Zersetzung des Al(OH)₃ zu einer starken Verminderung der sonst im Brandfall entstehenden toxischen und korrosiven Gase, z. B. bei PVC-Kabelmänteln führt. Soweit im übrigen das Flammschutzmittel zum Befüllen der Hohlräume im Dichtkörper bestimmt ist, kann es in eine gießbare elastische Gummimischung eingelagert sein, die der Elastizität und Verpreßbarkeit des Dichtkörpers selbst entspricht.

In einer bevorzugten Ausführungsform besteht der Dichtkörper in Axialrichtung des Kabels aus Scheiben, die mit Lagen aus dem Flammschutzmittel geschichtet sind. Die Scheiben können aus üblichem Chloroprenkautschuk und die Legen aus einer Mischung des Flammschutzmittels mit Gummi bestehen und die Scheiben und Lagen können durch Nägel aus Kautschuk oder Kunststoff miteinander verbunden sein. Dabei emfpiehlt es sich besonders, die erste Schicht auf der zur Wandaußenseite hin liegenden Stirnseite des Dichtkörpers aus einer Lage des Flammschutzmittels bestehen zu lassen, weil diese Schicht als erste der Brandeinwirkung ausgesetzt ist. Der schichtweise Aufbau des Dichtkörpers hat den Vorteil, daß - gleich an welcher Stelle eine Kabelaufnahme durch den Dichtkörper gebohrt wird, - diese Kabelaufnahme immer von den zwischen den Scheiben befindlichen Lagen des Flammschutzmittels umgeben ist.

Es besteht aber auch die Möglichkeit, im Dichtkörper Sacklöcher vorzusehen, die auf der zum Wandinneren hin liegenden Stirnseite des Dichtkörpers durch Stopfen verschlossen und mit dem Flammschutzmittel gefüllt sind, wobei die Sacklöcher über Radialspalte mit der Kabelaufnahme in Verbindung stehen, so daß im Brandfall durch diese Radialspalte hindurch das aus dem Flammschutzmittel freiwerdende Schutzgas in die Kabelaufnahme gelangen kann. Die Anordnung des Stopfens auf der zum Wandinneren hin liegenden Stirnseite des Dichtkörpers hat den Vorteil, daß auch mit zunehmenden Abbrand das verbleibende Flammschutzmittel jedenfalls innerhalb der Wandöffnung zwischen den sie an beiden Wandseiten begrenzenden Durchführungen bzw. deren Dichtkörpern als Feuerschutzmittel zum Schutz des Kabels zur Verfügung steht. Im einzelnen können die Sacklöcher mit ihren Radialspalten rund um die Kabelaufnahme im Dichtkörper verteilt angeordnet sein. Zweckmäßig sind dabei die Radialspalte durch eine Ringnut in der Umfangsfläche der Kabelaufnahme miteinander verbunden, was dazu beiträgt, daß das durch die Radialspalte strömende Schutzgas gleichmäßig über den Umfang des Kabels in der Kabelaufnahme verteilt wird.

Eine weitere Möglichkeit zur Ausbildung der Hohlräume im Dichtkörper besteht darin, im Dichtkörper an der Umfangsfläche der Kabelaufnahme mehrere zur Kabelaufnahme hin offene Ringkanäle vorzusehen, die axial nebeneinander mit gegenseitigem Abstand verlaufen und mit dem Flammschutzmittel gefüllt sind.

Handelt es sich um einen in bekannter Weise aus Paßstücken zusammengesetzten Dichtkörper, so können nach der Erfindung auch Paßstücke ohne Kabelaufnahme einen mit dem Flammschutzmittel gefüllten Hohlraum aufweisen, der eine durch einen Stopfen verschlossene Öffnung besitzt, so daß der Hohlraum erst nach Fertigstellung des Paßstückes mit dem Flammschutzmittel befüllbar ist.

Die Hohlräume im Futterrahmen verlaufen zweckmäßig ringförmig in Rahmenumfangsrichtung. Sie können entweder über den gesamten Ringumfang zum Dichtkörper hin offen sein oder sich über Radialspalte zum Dichtkörper hin öffnen. Besonders empfiehlt es sich, daß sich mindestens einer der ringförmigen Hohlräume gegen die Stirnseite des Dichtkörpers hin öffnet, um so in besonders einfacher Weise die Möglichkeit zu schaffen, daß in den Hohlräumen im Brandfall freiwerdendes Schutzgas die Stirnseite des Dichtkörpers bestreichen kann.

Bezüglich der Hohlräume in den die Druckvorrichtung bildenden Teilen bestehen verschiedene Ausführungsmöglichkeiten. Ist insbesondere die Druckvorrichtung als ein am Futterrahmen gehaltener, von der Wandaußenseite her zugänglicher und zu betätigender Druckring ausgebildet, so ist dieser Druckring zweckmäßig mit sich gegen den Dichtkörper und/oder seine Stirnseite öffnenden Kammern versehen, die mit dem Flammschutzmittel gefüllt sind. Üblicherweise sind derartige Druckringe ohnehin aus Kunststoff gefertigt und daher zur Werkstoffersparnis dünnwandig mit Versteifungsstegen und -rippen ausgestattet, die unschwer gemeinsam die zur Aufnahme des Flammschutzmittels benötigten Kammern bilden können.

Um besonders bei Durchführungen größeren Durchmessers die zur Wandaußenseite liegende Stirnfläche des Dichtkörpers zusätzlich sichern zu können, besteht die Möglichkeit, an dieser Stirnfläche mit dem Flammschutzmittel gefüllte Kapseln vorzusehen. Diese Kapseln öffnen sich im Brandfall durch Abbrennen und geben dabei das sich durch thermische Zersetzung des Feuerschutzmittels gebildete Schutzgas frei, das dann seine feuerhemmende Wirkung über die gesamte Stirnfläche des Dichtkörpers entfalten kann. Zweckmäßig sind die Kapseln jeweils als hohler Kopf einer mit dem Gewindeschaft in den Dichtkörper eingedrehten Kunststoffschraube ausgebildet.

Im folgenden wird die Erfindung an in der Zeichnung dargestellten Ausführungsbeispielen näher erläutert; es zeigen:

Fig. 1 einen Axialschnitt, teils in perspektivischer Darstellung, durch eine Durchführung nach der Erfindung,

Fig. 2 einen Axialschnitt entsprechend Fig. 1 durch eine andere Ausführungsform der erfindungsgemäßen Durchführung,

Fig. 3 einen Axialschnitt durch eine andere Ausführungsform des Dichtkörpers der Durchführung nach Fig. 1,

Fig. 4 die Seitenansicht des Dichtkörpers einer Durchführung nach Fig. 1 in einer weiteren Ausführungsform,

Fig. 5 einen Schnitt in Richtung V - V durch den Dichtkörper nach Fig. 1,

Fig. 6 eine weitere Ausführungsform eines Dichtkörpers der Durchführung nach Fig. 1 in einer Fig. 4 entsprechenden Darstellung.

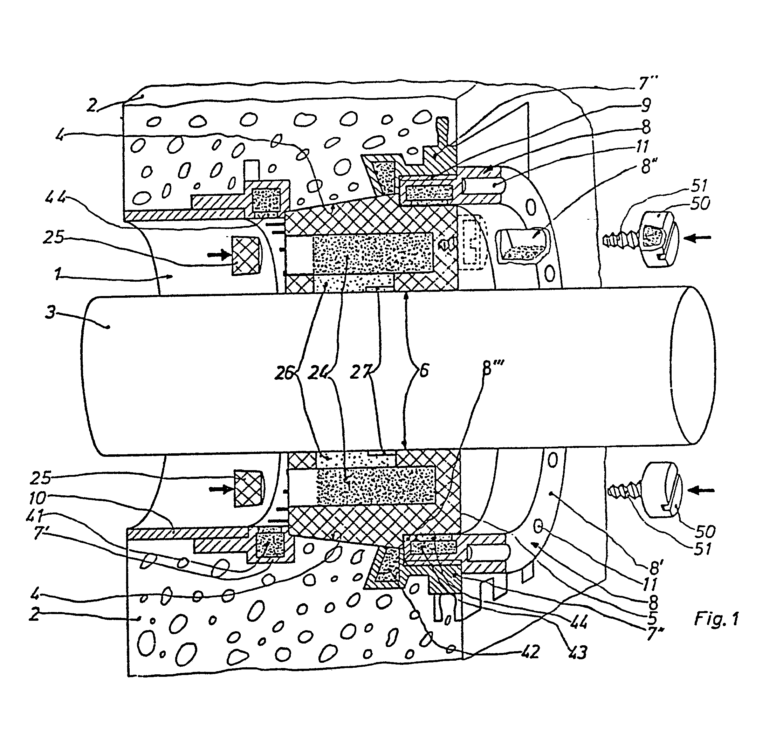

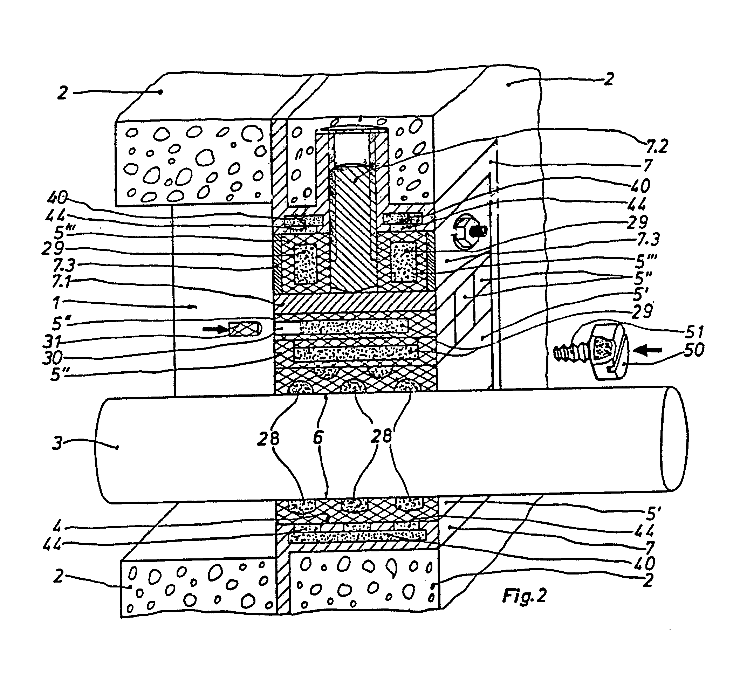

Die in den Fig. 1 und 2 dargestellten Kabeldurchführungen durch eine Öffnung 1 in einer Wand 2 sind für jeweils nur ein elektrisches Kabel 3 von im einzelnen nicht dargestelltem Innenaufbau bestimmt. Jedoch kann eine solche Durchführung auch mehrere Kabel aufnehmen.

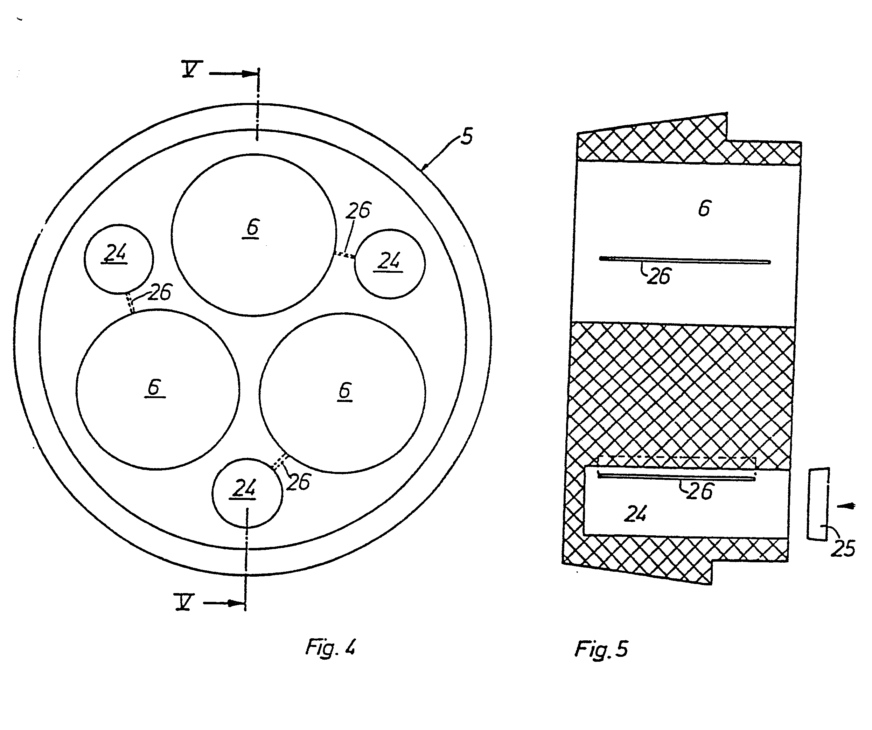

In diesem Fall besitzt der den Leerraum zwischen dem Kabel 3 und der Laibung 4 der Wandöffnung 1 ausfüllende, zumindest teilweise elastische Dichtkörper 5 mehrere, dem jeweiligen Kabelquerschnitt angepaßte Kabelaufnahmen 6, wie dies die Fig. 4 bis 6 am Beispiel von drei Kabelaufnahmen zeigen. In jedem Fall dichtet der Dichtkörper 5 einerseits gegen die Kabel 3, andererseits gegen die Laibung 4 der Wandöffnung 1 ab. Weiter besteht die Durchführung aus einem in den Ausführungsbeispielen zumindest einen Teil der Laibung 4 der Wandöffnung 1 bildenden Futterrahmen 7, 7', 7", der eine Druckvorrichtung zum elastischen Verpressen des Dichtkörpers 5 in der Wandöffnung 1 bildet. Soweit die Laibung 4 der Wandöffnung 1 nicht wie in Fig. 2 vollständig vom Futterrahmen 7 gebildet wird, bildet die Wand 2 selbst unmittelbar den vom Futterrahmen 7', 7" frei gelassenen Laibungsteil, wie dies in Fig. 1 der Fall ist. Dabei verjüngt sich die Laibung 4 der Wandöffnung 1 in Fig. 1 von der Wandaußenseite zum Wandinneren, also von rechts nach links, nach Art eines Kegelstumpfes. In dieser sich verjüngenden Wandöffnung ist der Dichtkörper 5 mittels eines die Druckvorrichtung bildenden Druckringes 8 axial verspannt. Dieser Druckring 8 ist in ein Muttergewinde 9 innerhalb eines fest in die Wand 2 eingelassenen Teils 7" des Futterrahmens eingeschraubt. Ein weiterer, zum Futterrahmen gehörender Teil 7' befindet sich zwischen dem auf der Wandinnenseite liegenden Ende des Dichtkörpers 5 und einem die Wandöffnung 1 auskleidenden Futterrohr 10. Der Druckring 8 ist ein Kunststoffspritzteil und besitzt zur Werkstoffersparnis in seinem vor der Wandaußenseite liegenden Bund 8' eine aus Versteifungsstegen und -rippen gebildete Kammerstruktur, die in dem bei 8" aufgeschnittenen Teil angedeutet ist. Der Bund 8' ist im übrigen mit Stirnlöchern 11 versehen, die zum Ansatz eines zum Verdrehen des Ringes 8 bestimmten, in der Zeichnung nicht dargestellten Schlüssels dienen. - Im Ausführungsbeispiel nach Fig. 2 ist der Dichtkörper 5 aus mehreren Paßstücken 5', 5" zusammengesetzt, von welchen nur die Paßstücke 5' die Kabelaufnahme 6 für das Kabel 3 bilden. Die verbleibenden Paßstücke 5" besitzen keine Kabelaufnahmen und dienen lediglich zum Ausfüllen des vom Futterrahmen 7 umschlossenen Durchführungsquerschnitts. Zum Verpressen des Dichtkörpers 5 dient eine quer im Futterrahmen 7 liegende bewegliche Preßplatte 7.1, die mittels einer Spannschraube 7.2 verspannt werden kann. Zwischen der Preßplatte 7.1 und dem in Fig. 2 oberen Querteil des Futterrahmens 7 sind weitere Paßstücke 5" eingelegt, die durch Druckplatten 7.3 axial verspannt sind.

In allen Fällen sind im Dichtkörper 5 sich zur Kabelaufnahme 6 hin öffnende Hohlräume vorgesehen, die mit einem in der Zeichnung durch Punktierung angedeuteten Flammschutzmittel gefüllt sind, das sich bei Erwärmung im Brandfall unter Wärmeaufnahme zersetzt und ein flammhemmendes Schutzgas abspaltet. Ähnliche mit Flammschutzmittel gefüllte Hohlräume befinden sich im Futterrahmen 7, 7', 7" und im Ausführungsbeispiel nach Fig. 1 auch in dessen die Druckvorrichtung bildenden Teilen, insbes. also im Druckring 8. Das die Hohlräume ausfüllende Flammschutzmittel enthält ganz überwiegend Aluminiumhydroxid Al(OH)3, das sich im Brandfall unter der dann entstehenden Wärme thermisch unter Aufnahme von Wärme zersetzt, wobei Al2O3 und H2O entsteht und je Mol Al(OH)3 eine Wärmemenge von 70 Kcal latent aufgenommen wird. Diese endogene Wärme bedeutet einen erheblichen Wärmeentzug an der Brandstelle. Das in Form von gasförmigem Wasserdampf entstehende Wasser verdrängt an der Brandstelle den Sauerstoff und wirkt dadurch flammhemmend. Außerdem haben die sich bei der Zersetzung des Aluminiumhydroxids abspielenden chemischen Reaktionen zur Folge, daß die sonst im Brandfall z. B. bei PVC-Kabelmänteln entstehenden toxischen und korrosiven Gase gebunden werden und ihr Entstehen im Ergebnis sehr vermindert wird. Dem Flammschutzmittel kann im übrigen ein bei Erwärmung im Brandfall aufgehender Blähstoff beigemischt sein, der den Abbrand des Kabelmantels und des Dichtkörpers im Bereich der Kabelaufnahme zumindest zum Teil ersetzen kann.

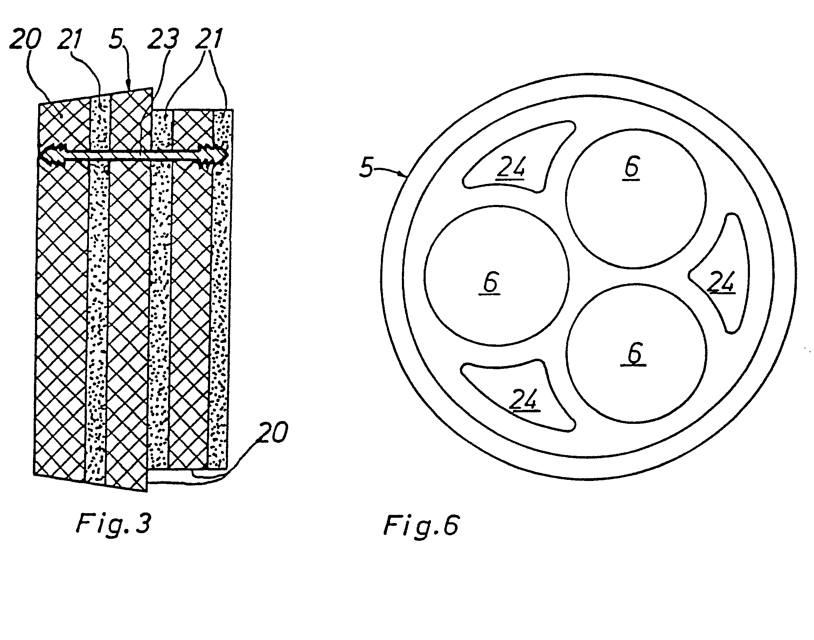

Im einzelnen kann wie ein Fig. 3 der Dichtkörper 5 in Axialrichtung des Kabels aus Scheiben 20 bestehen, die mit Lagen 21 aus dem Flammschutzmittel geschichtet sind. Die Scheiben 20 können aus üblichem Chloroprenkautschuk und die Lagen 21 aus einer Mischung des Flammschutzmittels mit Gummi bestehen, wobei diese Mischung bezüglich Elastizität und Verpreßbarkeit wie die Scheiben 20 eingestellt sind. Die Scheiben 20 und Lagen 21 können durch Nägel 23 aus Kautschuk oder Kunststoff miteinander verbunden sein. Die erste Schicht auf der zur Wandaußenseite hin, in Fig. 3 also rechts liegenden Stirnseite des Dichtkörpers 5 ist eine Lage des Flammschutzmittels, da diese Schicht als erste der Brandeinwirkung ausgesetzt ist.

Die Hohlräume können aber auch als Sacklöcher 24 im Dichtkörper 5 ausgebildet sein, wie dies die Fig. 1 und 4 bis 6 zeigen. Diese Sacklöcher 24 sind vorzugsweise auf der zum Wandinneren hin liegenden Stirnseite des Dichtkörpers 5 durch Stopfen 25 verschlossen und mit dem Flammschutzmittel gefüllt. Sie stehen über Radialspalte 26 mit den Kabelaufnahmen 6 in Verbindung, so daß die im Brandfall aus dem Flammschutzmittel entstehenden Schutzgase in die Kabelaufnahmen 6 gelangen können. Im einzelnen können die Sacklöcher 24 mit ihren Radialspalten 26 rund um die Kabelaufnahme 6 im Dichtkörper 5 verteilt angeordnet sein (Fig. 1). Außerdem sind die Radialspalte 26 durch eine Ringnut 27 in der Umfangsfläche der Kabelaufnahme 6 miteinander verbunden, so daß sich die aus den Radialspalten 26 austretenden Schutzgase gleichmäßig über den Umfang der Kabelaufnahme 6 verteilen können. Fig. 2 zeigt die weitere Möglichkeit, im Dichtkörper an der Umfangsfläche der Kabelaufnahme 6 mehrere zur Kabelaufnahme 6 hin offene Ringkanäle 28 vorzusehen, die axial nebeneinander mit gegenseitigem Abstand verlaufen und mit dem Flammschutzmittel gefüllt sind. Im übrigen läßt Fig. 2 erkennen, daß die Paßstücke 5", 5'" ohne Kabelaufnahme ebenfalls einen mit dem Flammschutzmittel gefüllten Hohlraum 29 aufweisen, der eine in der Zeichnung allerdings nicht in allen Fällen dargestellte Öffnung 30 mit Stopfen 31 zum Befüllen mit dem Flammschutzmittel aufweist.

Die Hohlräume 40, 41, 42, 43 im Futterrahmen 7, 7', 7", 8 verlaufen ausnahmslos ringförmig in Rahmenumfangsrichtung. Sie können, wie im Fall des Rahmenteils 7" in Fig. 1, über den gesamten Ringumfang zum Dichtkörper 5 hin offen sein oder sich, wie im Fall des Druckrings 8 und des Rahmenteils 7' in Fig. 1 oder wie im Ausführungsbeispiel nach Fig. 2 über Radialspalte 44 zum Dichtkörper 5 hin öffnen. Dabei öffnet sich insbesondere der ringförmige Hohlraum 41 des mit 7' bezeichneten Rahmenteils in Fig. 1 gegen eine der Stirnseiten des Dichtkörpers 5, so daß das aus den Radialspalten 44 austretende Schutzgas die gesamte Stirnfläche des Dichtkörpers 5 auf der Wandinnenseite bestreichen kann. Bei dem Druckring 8 in Fig. 1 ist der das Gewinde tragende Teil 8'" mit dem ringförmigen Hohlraum 43 versehen, der sich über die Ringspalte 44 unmittelbar zum Dichtkörper 5 hin öffnet. Außerdem sind die im Bund 8' des Druckrings 8 gebildeten Kammern 8" mit dem Flammschutzmittel gefüllt.

Fig. 6 zeigt, daß die zur Aufnahme des Flammschutzmittels dienenden Sacklöcher 24 keineswegs kreiszylindrisch wie etwa in Fig. 4 ausgebildet sein müssen. Es besteht vielmehr die Möglichkeit, die zwischen den Kabelaufnahmen 6 verbleibenden Wandbereich optimal für die Sacklöcher 24 auszunutzen, so daß zwischen den Kabelaufnahmen 6 und den Sacklöchern 24 Wände von nahezu überall gleicher Dicke verbleiben, die zur Folge haben, daß sich ein solcher Dichtkörper 5 außerordentlich schnell ausvulkanisieren läßt.

Schließlich zeigen die Fig. 1 und 2 die Möglichkeit, daß der Dichtkörper 5 auf seiner zur Wandaußenseite liegenden, dem Brandeinfluß zu allererst ausgesetzten Stirnseite mit dem Flammschutzmittel gefüllte Kapseln 50 tragen kann. Diese Kapseln 50 sind in den Ausführungsbeispielen jeweils der hohle Kopf einer mit dem Gewindeschaft 51 in den Dichtkörper 5 eingedrehten Kunststoffschraube.

Der Dichtkörper 5 wird in jedem Fall, ob als Einzelstück oder in Form mehrerer Paßstücke 5', 5", 5'", zunächst ohne das Flammschutzmittel fertig hergestellt und ausvulkanisiert. Erst dann wird in die Hohlräume das Flammschutzmittel eingefüllt und danach erst werden die befüllten Hohlräume verschlossen.

Patentansprüche

1. Durchführung für mindestens ein elektrisches Kabel (3) durch eine Wandöffnung (1), bestehend aus einem den Leerraum zwischen dem Kabel (3)

und der Laibung (4) der Wandöffnung (1) ausfüllenden, zumindest teilweise elastischen Dichtkörper (5), der eine dem Kabelquerschnitt entsprechende Kabelaufnahme (6) bildet und einerseits gegen das Kabel (3), andererseits gegen die Laibung (4) der Wandöffnung (1) abdichtet, und aus einem Futterrahmen (7, 7', 7"), der eine Druckvorrichtung zum elastischen Verpressen des Dichtkörpers (5) in der Wandöffnung (1) bildet, dadurch gekennzeichnet, daß im Dichtkörper (5) sich zur Kabelaufnahme (6) hin und/oder im Futterrahmen (7, 7', 7") bzw. in seinen die Druckvorrichtung bildenden Teilen (8) sich zum Dichtkörper (5) hin öffnende Hohlräume (24, 28, 40, 41, 42, 43) vorgesehen sind, die mit einem Flammschutzmittel gefüllt sind, das sich bei Erwärmung im Brandfall unter Wärmeaufnahme (endogen) zersetzt und ein flammhemmendes Schutzgas abspaltet.

2. Durchführung nach Anspruch 1 dadurch gekennzeichnet, daß das Flammschutzmittel überwiegend Aluminiumhydroxid (Al(OH)₃) enthält.

3. Durchführung nach Anspruch 1 oder 2, dadurch gekennzeichnet, daß der Dichtkörper (5) in Axialrichtung des Kabels (3) aus Scheiben (20) besteht, die mit Lagen (21) aus dem Flammschutzmittel geschichtet sind.

4. Durchführung nach Anspruch 3, dadurch gekennzeichnet, daß die Scheiben (20) aus üblichem Chloroprenkautschuk und die Lagen (21) aus einer Mischung des Flammschutzmittels mit Gummi bestehen, und daß die Scheiben (20) und Lagen (21) durch Nägel (23) aus Kautschuk oder Kunststoff miteinander verbunden sind.

5. Durchführung nach Anspruch 3 oder 4, dadurch gekennzeichnet, daß die erste Schicht auf der zur Wandaußenseite hin liegende Stirnseite des Dichtkörpers aus einer der Lagen (21) des Flammschutzmittels besteht.

6. Durchführung nach Anspruch 1 oder 2, dadurch gekennzeichnet, daß im Dichtkörper (5) Sacklöcher (24) vorgesehen sind, die auf der zum Wandinneren hin liegenden Stirnseite des Dichtkörpers (5) durch Stopfen (25) verschlossen und mit dem Flammschutzmittel gefüllt sind, und das die Sacklöcher (24) über Radialspalte (26) mit der Kabelaufnahme (6) in Verbindung stehen.

7. Durchführung nach Anspruch 6, dadurch gekennzeichnet, daß die Sacklöcher (24) mit ihren Radialspalten (26) rund um die Kabelaufnahme (6) im Dichtkörper (5) verteilt angeordnet sind.

8. Durchführung nach Anspruch 6 oder 7, dadurch gekennzeichnet, daß die Radialspalte (26) durch eine Ringnut (27) in der Umfangsfläche der Kabelaufnahme (6) miteinander verbunden sind.

9. Durchführung nach Anspruch 1 oder 2, dadurch gekennzeichnet, daß im Dichtkörper (5) an der Umfangsfläche der Kabelaufnahme (6) mehrere zur Kabelaufnahme hin offene Ringkanäle (28) vorgesehen sind, die axial nebeneinander mit gegenseitigem Abstand verlaufen und mit dem Flammschutzmittel gefüllt sind.

10. Durchführung nach einem der Ansprüche 1 bis 9, dadurch gekennzeichnet, daß bei einem aus Paßstücken (5', 5", 5''') zusammengesetzten Dichtkörper (5) auch Paßstücke (5", 5''') ohne Kabelaufnahme (6) einen mit dem Flammschutzmittel gefüllten Hohlraum (29) aufweisen, der eine durch einen Stopfen (31) verschlossene Öffnung (30) aufweist.

11. Durchführung nach Anspruch 1 oder 2, dadurch gekennzeichnet, daß die Hohlräume (40, 41, 42, 43) im Futterrahmen (7) ringförmig in Rahmenumfangsrichtung verlaufen.

12. Durchführung nach Anspruch 11, dadurch gekennzeichnet, daß die Hohlräume (40, 41, 42, 43) über den gesamten Ringumfang zum Dichtkörper (5) hin offen sind oder sich über Radialspalte (44) zum Dichtkörper (5) hin öffnen.

13. Durchführung nach Anspruch 12, dadurch gekennzeichnet, daß mindestens einer der ringförmigen Hohlräume (41) sich gegen die Stirnseite des Dichtkörpers (5) öffnet.

14. Durchführung nach einem der Ansprüche 1 bis 13, dadurch gekennzeichnet, daß bei Ausbildung der Druckvorrichtung als ein am Futterrahmen (7) gehaltener, von der Wandaußenseite her zugänglicher und zu betätigender Druckring (8) dieser mit sich gegen den Dichtkörper (5) und/oder seine Stirnseite öffnenden Kammern (8") versehen ist, die mit dem Flammschutzmittel gefüllt sind.

15. Durchführung nach einem der Ansprüche 1 bis 14, dadurch gekennzeichnet, daß der Dichtkörper (5) auf seiner zur Wandaußenseite liegenden Stirnseite mit dem Flammschutzmittel gefüllte Kapseln (50) trägt.

16. Durchführung nach Anspruch 15, dadurch gekennzeichnet, daß die Kapseln (50) jeweils als hohler Kopf einer mit dem Gewindeschaft (51) in den Dichtkörper (5) eingedrehten Kunststoffschraube ausgebildet ist.

**Claims**

1. A bushing for passing at least one electrical cable (3) through a wall opening (1), comprising an at least partially elastic sealing body (5) which fills the empty space between the cable (3) and the internal surface (4) of the wall opening (1) and which forms a cable receiving means (6) corresponding to the cable cross-section and which seals on the one hand relative to the cable (3) and on the other hand relative to the internal surface (4) of the wall opening (1), and a mounting frame (7, 7', 7") which forms a pressing means for elastically pressing the sealing body (5) in the wall opening (1) characterised in that there are provided cavities (24, 28, 40, 41, 42, 43) which are open in the sealing body (5) towards the cable receiving means (6) and/or which are open in the mounting frame (7, 7', 7") or in its parts (8) forming the pressing means towards the sealing body (5) and which are filled with a flame-proofing agent which when heated in a fire situation decomposes with the absorption of heat (endogenously) and gives off a flame-retardant protective gas.

2. A bushing according to claim 1 characterised in that the flame-proofing agent predominantly contains aluminium hydroxide $(Al(OH)_3)$.

3. A bushing according to claim 1 or claim 2 characterised in that in the axial direction of the cable (3) the sealing body (5) comprises discs (20) which are coated with layers (21) of the flameproofing agent.

4. A bushing according to claim 3 characterised in that the discs (20) comprise conventional chloroprene rubber and the layers (21) comprise a mixture of the flame-proofing agent with rubber and that the discs (20) and layers (21) are joined together by nails (23) of rubber or plastics material.

5. A bushing according to claim 3 or claim 4 characterised in that the first layer portion on the end of the sealing body which is towards the outward side of the wall comprises one of the layers (21) of the flame-proofing agent.

6. A bushing according to claim 1 or claim 2 characterised in that provided in the sealing body (5) are blind holes (24) which are closed by plugs (25) on the end of the sealing body (5) towards the interior of the wall and which are filled with the flame-proofing agent and that the blind holes (24) communicate with the cable receiving means (6) by way of radial slots (26).

7. A bushing according to claim 6 characterised in that the blind holes (24) with their radial slots (26) are arranged in distributed array around the cable receiving means (6) in the sealing body (5).

8. A bushing according to claim 6 or claim 7 characterised in that the radial slots (26) are connected together by an annular groove (27) in the peripheral surface of the cable receiving means (6).

9. A bushing according to claim 1 or claim 2 characterised in that provided in the sealing body (5) at the peripheral surface of the cable receiving means (6) are a plurality of annular passages (28) which are open towards the cable receiving means and which extend in axially juxtaposed relationship at spacings from each other and which are filled with the flame-proofing agent.

10. A bushing according to one of claims 1 to 9 characterised in that, in the case of a sealing body (5) which is composed of fitting portions (5', 5", 5"'), even fitting portions (5", 5"') without a cable receiving means (6) have a cavity (29) which is filled with the flame-proofing agent and which has an opening (30) which is closed by a plug (31).

11. A bushing according to claim 1 or claim 2 characterised in that the cavities (40, 41, 42, 43) extend in an annular configuration in the mounting frame (7) in the peripheral direction thereof.

12. A bushing according to claim 11 characterised in that the cavities (40, 41, 42, 43) are open towards the sealing body (5) over the entire periphery of the ring or are open towards the sealing body (5) by way of radial slots (44).

13. A bushing according to claim 12 characterised in that at least one of the annular cavities (41) opens towards the end of the sealing body (5).

14. A bushing according to one of claims 1 to 13 characterised in that, when the pressing means is in the form of a pressing ring (8) which is held to the mounting frame (7) and which is accessible and to be actuated from the outward side of the wall the pressing ring is provided with chambers (8") which open towards the sealing body (5) and/or the end thereof and which are filled with the flame-proofing agent.

15. A bushing according to one of claims 1 to 14 characterised in that the sealing body (5) carries capsules (50) which are filled with the flame-proofing agent on the end of the sealing body which is towards the outward side of the wall.

16. A bushing according to claim 15 characterised in that the capsules (50) are each in the form of a hollow head of a plastics screw which is screwed with the screwthreaded shank (51) into the sealing body (5).

**Revendications**

1. Traversée pour au moins un câble électrique (3) à travers une ouverture de paroi (1), comprenant un corps d'étanchéité (5) du moins en partie élastique remplissant le vide entre le câble (3) et la surface intérieure (4) de l'ouverture de paroi (1), qui forme un logement de câble (6) correspondant à la section transversale du câble et assure l'étanchéité par rapport au câble (3), d'une part, et par rapport à la surface intérieure (4) de l'ouverture de paroi (1), d'autre part, et un cadre de fourrure (7, 7', 7") constituant un dispositif de compression pour la compression élastique du corps d'étanchéité (5) dans l'ouverture de paroi (1), *caractérisée par le fait* qu'elle comprend des cavités (24, 28, 40, 41, 42, 43) placées dans le corps d'étanchéité (5) et s'ouvrant en direction du logement de câble (6) et/ou placées dans le cadre de fourrure (7, 7', 7") et respectivement dans ses éléments (8) formant le dispositif de compression et s'ouvrant en direction du corps d'étanchéité (5), lesquelles cavités sont remplies d'un produit ignifuge qui, en cas d'incendie, se décompose avec absorption de chaleur (endogène) et dégage un gaz protecteur ignifuge.

2. Traversée selon la revendication 1, caractérisée par le fait que l'agent ignifuge contient essentiellement de l'hydroxyde d'aluminium (Al(OH)₃).

3. Traversée selon l'une des revendications 1 ou 2, caractérisée par le fait que le corps d'étanchéité (5) est constitué, dans le sens axial du câble (3), de disques (20) qui alternent avec des couches (21) d'agent ignifuge.

4. Traversée selon la revendication 3, caractérisée par le fait que les disques (20) sont réalisés à partir d'un caoutchouc au chloroprène ordinaire, alors que les couches (21) sont constituées par un mélange d'agent ignifuge et de caoutchouc, et que les disques (20) et les couches (21) peuvent être reliés entre eux par des clous (23) en caoutchouc ou en matière plastique.

5. Traversée selon l'une des revendications 3 ou 4, caractérisée par le fait que la première couche sur la face frontale du corps d'étanchéité dirigée vers la face extérieure de la paroi est constituée par l'une des couches (21) du produit ignifuge.

6. Traversée selon l'une des revendications 1 ou 2, caractérisée par le fait qu'il est prévu dans le corps d'étanchéité (5) des trous borgnes (24) qui sont fermés par des bouchons (25) sur le côté frontal du corps d'étanchéité (5) dirigé vers l'intérieur de la paroi et remplis de produit ignifuge, et que les trous borgnes (24) communiquent avec le logement de câble (6) par l'intermédiaire de fentes radiales (26).

7. Traversée selon la revendication 6, caractérisée par le fait que les trous borgnes (24) avec leurs fentes radiales (26) sont répartis tout autour du logement de câble (6) à l'intérieur du corps d'étanchéité (5).

8. Traversée selon l'une des revendications 6 ou 7, caractérisée par le fait que les fentes radiales (26) sont reliées entre elles par une rainure annulaire (27) dans la surface circonférentielle du logement de câble (6).

9. Traversée selon l'une des revendications 1 ou 2, caractérisée par le fait qu'il est prévu dans le corps d'étanchéité (5), sur la surface circonférentielle du logement de câble (6), une pluralité de canaux annulaires (28) ouverts en direction du logement de câble qui s'étendent à distance les uns à côté des autres et sont remplis d'agent ignifuge.

10. Traversée selon l'une quelconque des revendications 1 à 9 caractérisée par le fait que, dans le cas d'un corps d'étanchéité (5) assemblé à partir de pièces ajustées (5', 5", 5'"), les pièces ajustées (5", 5'") sans logement de câble (6) présentent, elles aussi, une cavité (29) remplie d'agent ignifuge et munie d'une ouverture (30) fermée par un bouchon (31).

11. Traversée selon l'une des revendications 1 ou 2, caractérisée par le fait que les cavités (40, 41, 42, 43) dans le cadre de fourrure (7) s'étendent en forme d'anneaux dans le sens circonférentiel dudit cadre.

12. Traversée selon la revendication 11, caractérisée par le fait que les cavités (40, 41, 42, 43) sont ouvertes vers le corps d'étanchéité (5) sur toute la périphérie de l'anneau ou s'ouvrent en direction du corps d'étanchéité (5) par l'intermédiaire de fentes radiales (44).

13. Traversée selon la revendication 12, caractérisée par le fait qu'au moins l'une des cavités annulaires (41) s'ouvre en direction de la face frontale du corps d'étanchéité (5).

14. Traversée selon l'une quelconque des revendications 1 à 13, caractérisée par le fait que, lorsque le dispositif de compression est conformé en cône de serrage (8) maintenu sur le cadre de fourrure (7), accessible et actionnable à partir de la face extérieure de la paroi, ledit cône de serrage est muni de chambres (8") qui s'ouvrent vers le corps d'étanchéité (5) et/ou sa face frontale et qui sont remplies d'agent ignifuge.

15. Traversée selon l'une quelconque des revendications 1 à 14, caractérisée par le fait que le corps d'étanchéité (5) porte, sur sa face frontale dirigée vers la face extérieure de la paroi, des capsules (50) remplies de produit ignifuge.

16. Traversée selon la revendication 15, caractérisée par le fait que les capsules (50) sont respectivement réalisées sous la forme d'une tête creuse d'une vis en matière plastique dont la tige filetée (51) est vissée dans le corps d'étanchéité (5).

EP 0 154 027 B1

Fig. 1

1

*Fig.2*

Fig.3

Fig.6

Fig. 4

Fig. 5